# EUROPEAN PATENT APPLICATION

(11) **EP 2 325 721 A1**
(43) Date of publication of application: **25.05.2011**
(21) Application number: 08808988.3
(22) Date of filing: 14.08.2008
(51) Int. Cl.: G06F 1/20

(54) **COOLING METHOD AND COMPUTER**

(71) Applicant: Fujitsu Limited, Kawasaki-shi, Kanagawa 211-8588 (JP)
(72) Inventor: YAMASAKI, Shinichi, Kawasaki-shi Kanagawa 211-8588 (JP)
(74) Representative: Holz, Ulrike
(86) International application number: PCT/JP2008/064601
(87) International publication number: WO 2010/018635

(57) **Abstract**

A cooling method for a computer having at least one rack and a plurality of processing equipments mounted on the one rack, includes mounting the plurality of processing equipments on the one rack in a state stacked in a vertical direction of the one rack, and cooling the plurality of processing equipments mounted on the one rack, by operating a fan of at least one of the plurality of processing equipments in order to flow a cooling current in the vertical direction.

## Description

### TECHNICAL FIELD

The present invention generally relates to cooling methods and computers, and more particularly to a cooling method that cools a device mounted on a rack by a fan, and to a computer employing such a cooling method.

### BACKGROUND ART

In a general electronic equipment, a cooling fan is provided in order to cope with heat generated during operation. The cooling method using such a fan is employed in the so-called rack mount type computer in which a plurality of processing equipments forming the computer are mounted on a rack. In order to enable cooling of each processing equipment without being affected by other processing equipments mounted on the rack or the mounting position of each processing equipment, the fans are disposed so that a cooling current flows in a horizontal direction in a state where each processing equipment is mounted on the rack.

Even in a case where a large-scale computer system is formed by mounting a large number of relatively small processing equipments on the rack and connecting each of the processing equipments via a network, each of the processing equipments is cooled by the above described cooling method.

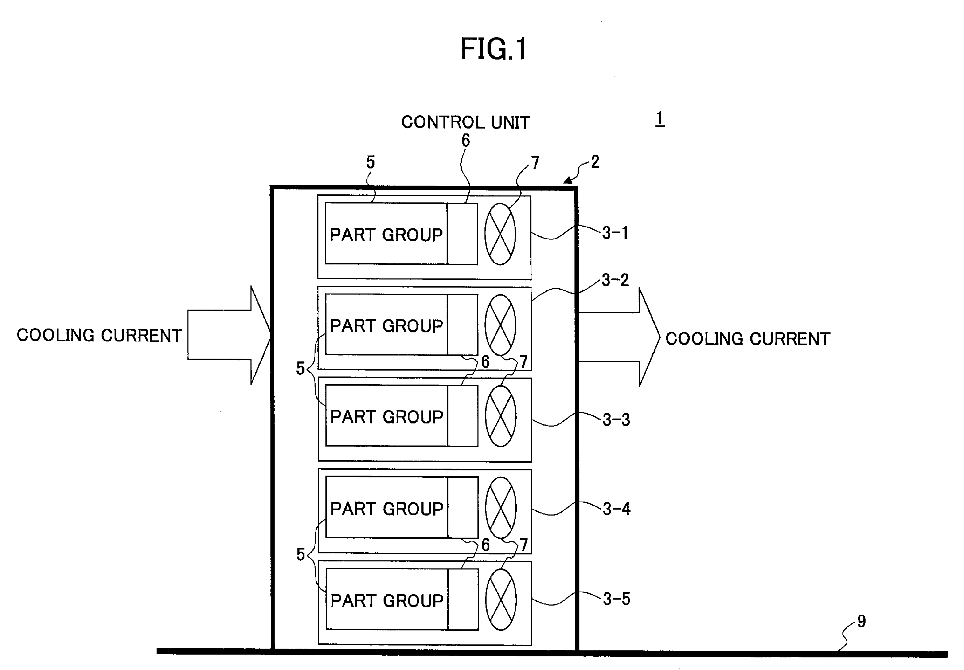

FIG. 1 is a diagram illustrating an example of a computer employing the conventional cooling method. In the example illustrated in FIG. 1, a plurality of processing equipments 3-1 through 3-5 are mounted on a rack 2 of a computer 1. Each of the processing equipments 3-1 through 3-5 includes a part group 5, such as an ASIC (Application Specific Integrated Circuit), a control unit 6, and a fan 7. In FIG. 1, the computer 1 is set on a setup surface 9. When the fan 7 of each of the processing equipments 3-1 through 3-5 operates in this example, the cooling current flows from the left to right as indicated by arrows, in a horizontal direction with respect to the setup surface 9.

In the large-scale computer system described above, a job is allocated in units of processing equipments, and the number of processing equipments that actually operates dynamically changes depending on the load state of the computer system. The number of operating processing equipments increases when the load on the computer system becomes large, and the number of operating processing equipments decreases when the load on the computer system becomes small. However, in order to cope with a sudden change in the load, the power supply of the processing equipments is always in the ON state.

In the state where the load on the computer system is small, the power supply of the processing equipments that are actually not operating, that is, the processing equipments that are not processing jobs, is in the ON state, and the cooling in units of processing equipments is required. For this reason, power is consumed by the operation of the fans, even with respect to those processing equipments that are actually not in the operating state. The power consumption of the large-scale computer system is extremely large, and it is important to reduce the power consumption not only from the point of view of reducing the operating cost, but also from the point of view of solving environmental problems on the world-wide scale. But it is difficult to simultaneously improve the cooling efficiency of the processing equipments and reduce the power consumption.

On the other hand, in order to prevent the operation of the processing equipment from stopping due to failure, the cooling fan in many cases employ a redundant structure within the processing equipment. However, when the number of processing equipments forming the large-scale computer system is large and the cooling fan having the redundant structure is provided for each of the processing equipments in order to positively cool the processing equipments, the number of cooling fans, due to the redundant structure, increases considerably in proportion to the number of processing equipments, to thereby increase the cost of the computer system.
Patent Document 1: Japanese Laid-Open Patent Publication No.10-268979
Patent Document 2: Japanese Laid-Open Patent Publication No.8-137579
Patent Document 3: Japanese National Publication of International Patent Application No.2006-512627

### DISCLOSURE OF THE INVENTION

### PROBLEMS TO BE SOLVED BY THE INVENTION

Conventionally, there was a problem in that it is difficult to positively and efficiently cool a processing equipment and to reduce the power consumption.

Accordingly, it is one object of the present invention to positively and efficiently cool the processing equipment and to reduce the power consumption.

### PROBLEMS TO BE SOLVED BY THE INVENTION

According to one aspect of the present invention, there is provided a cooling method for a computer having at least one rack and a plurality of processing equipments mounted on the one rack, comprising mounting the plurality of processing equipments on the one rack in a state stacked in a vertical direction of the one rack; and cooling the plurality of processing equipments mounted on the one rack, by operating a fan of at least one of the plurality of processing equipments in order to flow a cooling current in the vertical direction.

According to another aspect of the present invention, there is provided a computer including at least one rack; a plurality of processing equipments mounted on the one rack in a state stacked in a vertical direction of the one rack; and control means for cooling the plurality of processing equipments mounted on the one rack, by operating a fan of at least one of the plurality of processing equipments in order to flow a cooling current in the vertical direction.

### EFFECTS OF THE INVENTION

According to the disclosed cooling method and computer, it is possible to positively and efficiently cool the processing equipment and to reduce the power consumption.

### BRIEF DESCRIPTION OF THE DRAWING

FIG. 1 is a diagram illustrating an example of a computer employing the conventional cooling method;
FIG. 2 is a diagram illustrating a computer in a first embodiment of the present invention;
FIG. 3 is a perspective view illustrating a structure of a rack;
FIG. 4 is a diagram illustrating a state where a dummy device is mounted on the rack;
FIG. 5 is a plan view illustrating a structure of a part group;
FIG. 6 is a diagram for explaining temperature sensors provided within a processing equipment;
FIG. 7 is a diagram illustrating an example of equipment state information;
FIG. 8 is a flow chart for explaining a equipment state information generating process of a control unit;
FIG. 9 is a flow chart for explaining a process of a control server for a case where only a fan of an operating processing equipment is operated;
FIG. 10 is a diagram for explaining generation of a equipment state list;
FIG. 11 is a diagram illustrating an example of the equipment state list;
FIG. 12 is a flow chart for explaining a process of the control server for a case where only the fan of the processing equipment that requires cooling is operated;
FIG. 13 is a diagram illustrating an example of fan operation start temperature information;
FIG. 14 is a diagram illustrating a computer in a second embodiment of the present invention;
FIG. 15 is a flow chart for explaining a process of the control unit for a case where only the fan of the operating processing equipment is operated;
FIG. 16 is a flow chart for explaining a process of the control unit for a case where only the fan of the processing equipment that requires cooling is operated;
FIG. 17 is a flow chart for explaining a process in a fourth embodiment of the present invention;
FIG. 18 is a flow chart for explaining a process in a fifth embodiment of the present invention; and
FIG. 19 is a diagram illustrating a computer in a sixth embodiment of the present invention.

### DESCRIPTION OF THE REFERENCE NUMERALS

- 11: Computer
- 12-1 through 12-N: Rack
- 13-1 through 13-M: Processing Device
- 15: Part Group
- 16: Control Unit
- 17: Fan
- 18: Cooling Current Plate
- 19: Setup Surface
- 20, 21: Communication Channel
- 25: Temperature Sensor
- 31: Control Server

### BEST MODE OF CARRYING OUT THE INVENTION

In the disclosed cooling method and computer, a fan is provided with respect to each processing equipment that is mounted on a rack of the computer, so that a cooling current flows approximately in a vertical direction in a state where each processing equipment is mounted on the rack. Amongst the plurality of processing equipments mounted on a single rack, all of the processing equipments mounted on the single rack may be cooled if the fan of at least one processing equipment operates.

Hence, the processing equipment may positively and efficiently cooled, and the power consumption may be reduced. Particularly when the cooling current is made to flow in the vertical direction from a lower side towards an upper side of the rack, the cooling efficiency may be improved by not flowing against the ascending current.

### First Embodiment

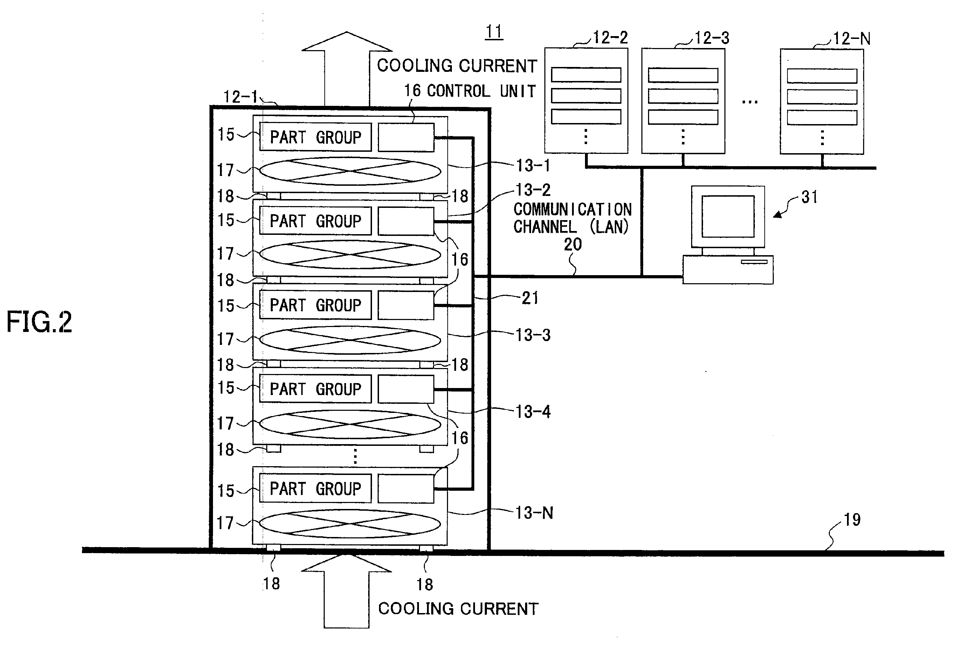

FIG. 2 is a diagram illustrating a computer in a first embodiment of the present invention. In the example illustrated in FIG. 2, a computer 11 includes a plurality of racks 12-1 through 12-N that are connected via a communication channel 20, such as a LAN (Local Area Network). N is a natural number greater than or equal to 1. Each of the racks 12-1 through 12-N is mounted with a plurality of processing equipments 13-1 through 13-M that are connected via a communication channel 21, such as an internal LAN. The processing equipments 13-1 through 13-M are mounted in a state stacked in the vertical direction within each of the racks 12-1 through 12-N. M is a natural number greater than or equal to 2, and M=5 in this example. A cooling current flow guide 18 is provided on an upper surface or a lower surface of each of the processing equipments 13-1 through 13-M, and closes a gap between two mutually adjacent processing equipments. The cooling current flow guide 18 may be formed by a material having a suitable flexibility or resiliency, such as rubber, for example. Each of the processing equipments 13-1 through 13-M includes a part group 15, such as an ASIC, a control unit 16, and a fan 17. In FIG. 2, the computer 11 is set up on a setup surface 19.

In this embodiment, a control server 31 that functions as an external control unit is connected to the communication channel 20. The control server 31 may be formed by a general-purpose computer having a known structure that includes a processor and a storage part. The control server 31 may form a part of the computer 11.

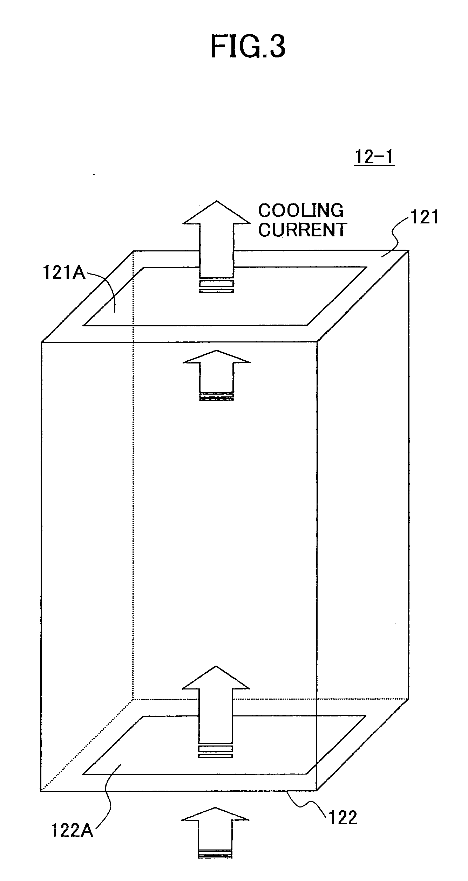

It is assumed for the sake of convenience that, in this embodiment, each of the racks 12-1 through 12-N has the same structure and may be mounted with the same number of processing equipments 13-1 through 13-M. FIG. 3 is a perspective view illustrating a structure of the rack 12-1, for example. Openings 121A and 122A for passing the cooling current are respectively provided at an upper surface 121 and a lower surface 122 of the rack 12-1. For example, when the fan 17 of at least one of the processing equipments 13-1 through 13-M within the rack 12-1 operates in this example, the cooling current flows approximately in the vertical direction from the lower side towards the upper side as indicated by arrows in FIG. 3, in order to cool all of the processing equipments 13-1 through 13-M within the rack 12-1.

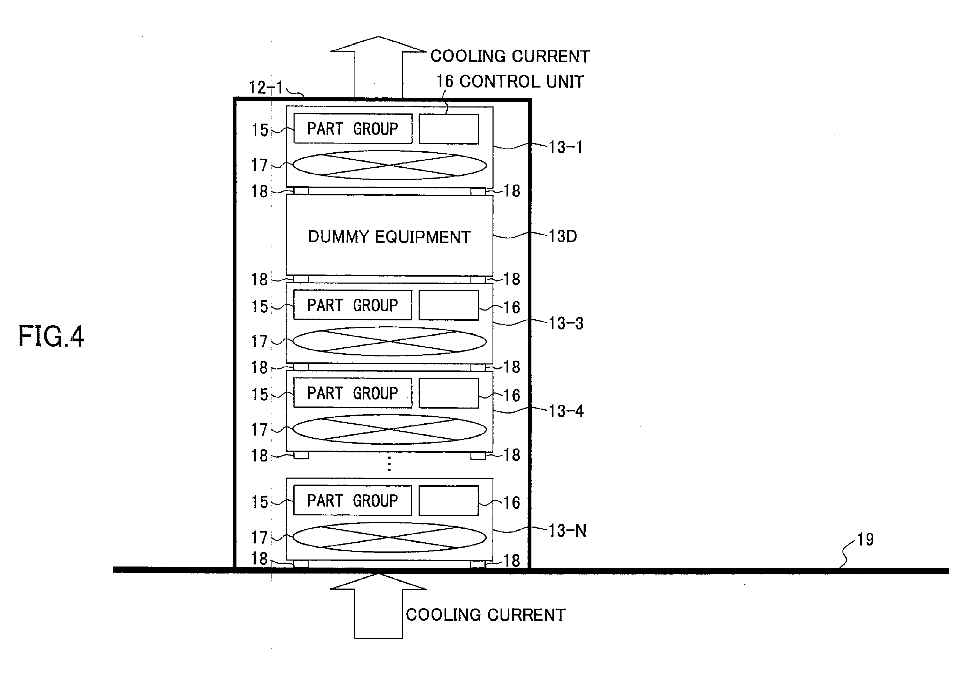

A dummy equipment 13D may be mounted at a position where no processing equipment is mounted, in each of the racks 12-1 through 12-N. FIG. 4 is a diagram illustrating a state where the dummy equipment 13D is mounted on the rack 12-1 at the second row from the top. In FIG. 4, those parts that are the same as those corresponding parts in FIG. 2 are designated by the same reference numerals, and a description thereof will be omitted. The dummy equipment 13D is formed solely from a housing that has an external shape and external dimensions identical to those of each of the processing equipments 13-1 through 13-M. By mounting the dummy equipment 13D at the position where the processing equipment 13-2 is not mounted, the cooling current may be rectified so as not to obstruct the flow of the cooling current in the vertical direction, as compared to a case where no dummy equipment 13D is mounted.

In this embodiment and each of embodiments described hereunder, it is assumed for the sake of convenience that the cooling current flows in the vertical direction or approximately in the vertical direction with respect to the setup surface 19, from the lower side towards the upper side of each rack. The gap between two mutually adjacent processing equipments is closed by the cooling current flow guide 18, and the cooling current will not leak from the gap. Hence, it is possible to secure a flow rate greater than or equal to a predetermined value for the cooling current flowing in the vertical direction. In addition, the cooling efficiency is improved because the cooling current does not flow against the ascending current within the rack. However, it is of course possible to flow the cooling current in the vertical direction or approximately in the vertical direction with respect to the setup surface 19, from the upper side towards the lower side of each rack. Furthermore, the direction in which the cooling current flows does not need to be set the same within all of the racks, and for example, the directions in which the cooling currents flow within two mutually adjacent racks may be set opposite to each other.

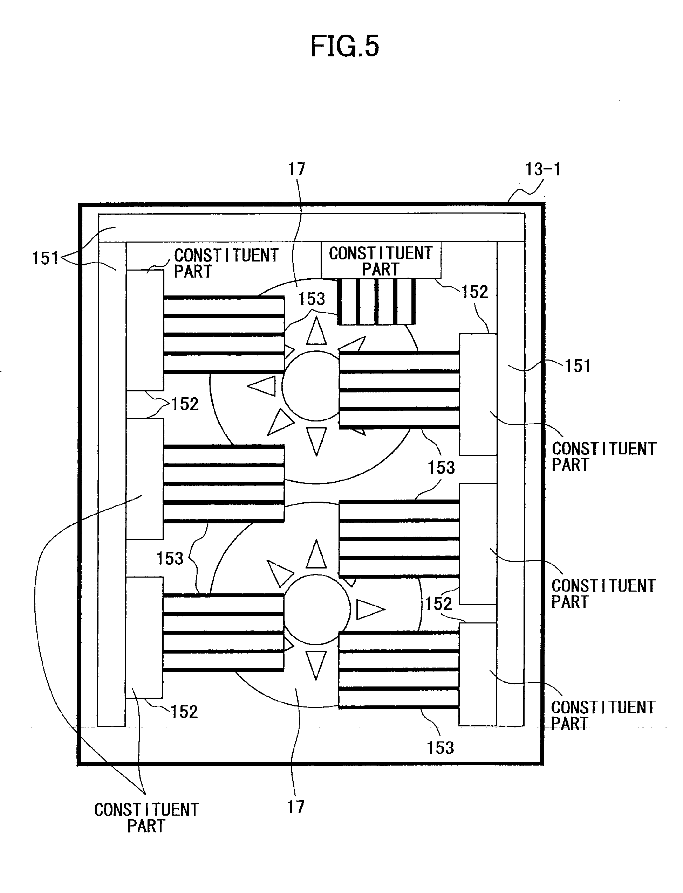

FIG. 5 is a plan view illustrating a structure of a part group 15. For example, the lower side in FIG. 5 corresponds to the front side in FIG. 2. The part group 15 within the processing equipment 13-1 illustrated in FIG. 5 includes part mounting substrates 151, constituent parts 152 mounted on the corresponding part mounting substrates 151, and part cooling radiator fins 153. The constituent part 152 includes a processor, such as a CPU (Central Processing Unit), and a storage unit, such as a semiconductor memory and a disk unit. In this example, 2 fans 17 are provided within the processing equipment 13-1 in order to flow the cooling current from the lower side towards the upper side of the rack 12-1. In addition, the constituent parts 152 and the part cooling radiator fins 153 are arranged to efficiently cool the part group 15 by the cooling current that flows in the vertical direction in FIG. 2. The part cooling radiator fins 153 have a shape that minimizes obstruction of the flow of the cooling current flowing in the vertical direction. Of course, the number of fans 17 provided within a single processing equipment is not limited to 2, and the number may be 1 or 3 or more.

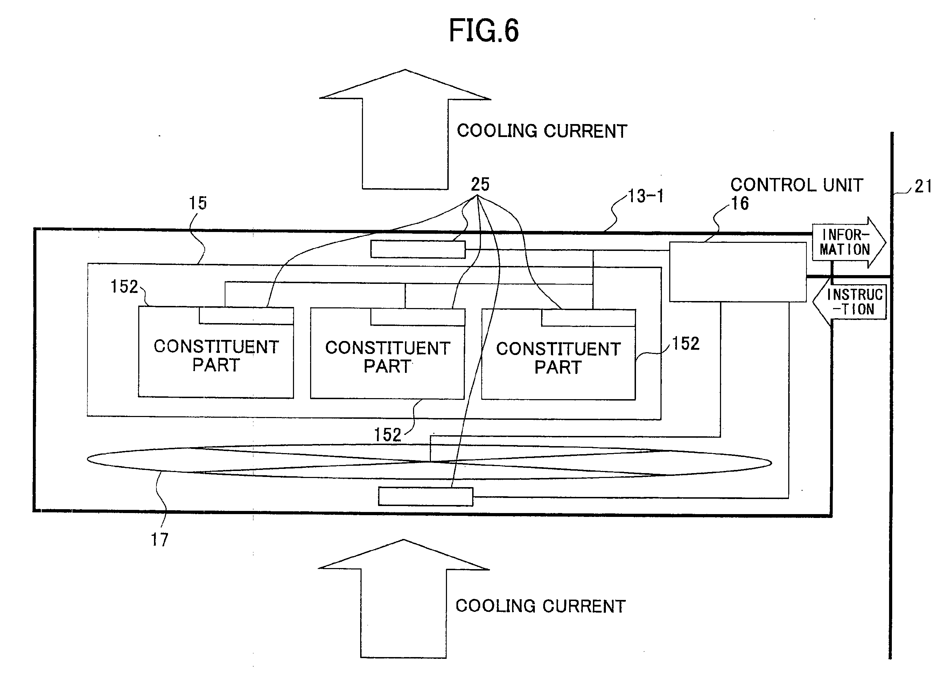

FIG. 6 is a diagram for explaining temperature sensors provided within each of the processing equipments 13-1 through 13-M. As an example, FIG. 6 illustrates temperature sensors 25 within the processing equipment 13-1. The temperature sensor 25 is provided with respect to each constituent part 152 and each fan 17 of the part group 15, and the temperature sensors 25 detect the temperature at predetermined positions within each of the processing equipments 13-1 through 13-M. The temperature sensors 25 provided with respect to the fan 17 include the temperature sensor 25 provided on an upstream side (that is, on the lower side of the processing equipment 13-1) of the fan 17, and the temperature sensor 25 provided on a downstream side (that is, on the upper side of the processing equipment 13-1). Of course, the number of temperature sensors 25 is not limited to 5.

In a case where the processing equipment 13-1 illustrated in FIG. 6 is a UNIX (registered trademark) server such as the SPARC Enterprise (product name) having a known structure, for example, a system monitoring mechanism (XSCF: extended System Control Facility) corresponding to the control unit 16 is provided. This XSCF of the processing equipment 13-1 includes a function to control the rotational speed of the fans 17 within the processing equipment 13-1, a function to read an output value of each of the temperature sensors 25, a communication function to exchange various kinds of information with the XSCFs of other processing equipments via the communication channel 21, and a communication function to exchange various kinds of information with the control server 31 via the communication channels 21 and 22. Accordingly, the control unit 16 within the processing equipment 13-1 may control, under the control of the control server 31, the rotation speed of the fans 17 within the processing equipment 13-1 based on the output values of the temperature sensors 25 within the processing equipment 13-1 and the temperature sensors 25 within the other processing equipments 13-2 through 13-M, and the equipment state information included in the various kinds of information described above. In this embodiment, it is assumed for the sake of convenience that the output values of the temperature sensors 25 and the various kinds of information including the equipment state information are stored in the storage part within the control unit 16, however, the storage part may be connected externally to the control unit 16 and may be included in the constituent part 152, for example.

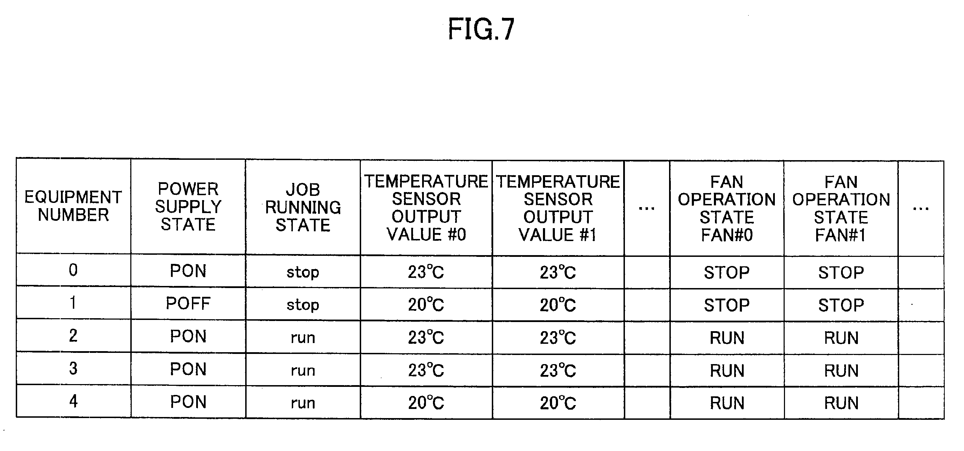

The equipment state information indicates the state of each of the processing equipments 13-1 through 13-M, and has a format illustrated in FIG. 7, for example. FIG. 7 is a diagram illustrating an example of the equipment state information. In FIG> 7, an equipment number is the information that is added to the processing equipment to identify the processing equipment, a power supply state is the information that indicates whether the power supply of the processing equipment is in an ON state PON or an OFF state POFF. A job running state is the information that indicates whether the operating state of the processing equipment is a running state "run" or a stopped state "stop", and temperature sensor output values #0, #1, ... are the information that indicates the output values of the corresponding temperature sensors 25 provided within the processing equipment. Fan operation states FAN#0, FAN#1, ... are the information that indicates the operation state of the fans 17 provided within the processing equipment. The operation state of the fan 17 includes a stopped state "STOP", a steady state "RUN", a high-speed rotation state "HIGH", and a failure state "ALARM". The job running state and the power supply state do not necessarily match.

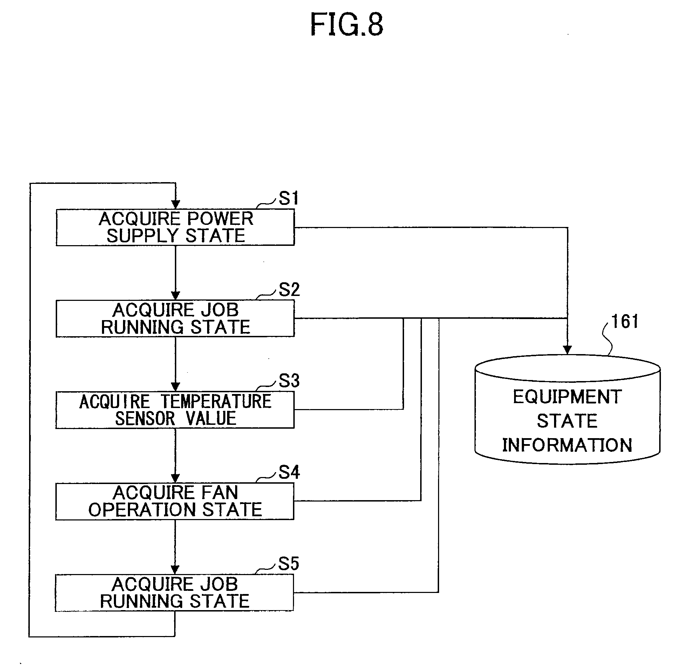

FIG. 8 is a flow chart for explaining a equipment state information generating process of the control unit 16 within each of the processing equipments 13-1 through 13-M. For the sake of convenience, a description will be given of the equipment state information generating process of the control unit 16 within the processing equipment 13-1. In FIG. 8, a step S1 acquires the power supply state of the processing equipment 13-1, and stores the power supply state in a storage part 161 within the processing equipment 13-1. A step S2 acquires the job running state of the processing equipment 13-1, and stores the job running state in the storage part 161. A step S3 acquires the output values of each of the temperature sensors 25 within the processing equipment 13-1, and stores the temperature sensor output values in the storage part 161. A step S4 acquires the operation state of each of the fans 17 within the processing equipment 13-1, and stores the fan operation state in the storage part 161. A step S5 reacquires the job running state of the processing equipment 13-1, and stores the job running state in the storage part 161. The process of the steps S1 through S5 is repeated periodically.

Next, a description will be given of a process of the control server 31 that acquires the equipment state information illustrated in FIG. 7 from the control unit 16 within each of the processing equipments 13-1 through 13-M in order to generate an equipment state list, and to instruct operation of the fan 17 only to the control unit 16 of the processing equipment that is indicated as having a job running (or in operation) within the equipment state list, for each of the racks 12-1 through 12-N. In this case, only a minimum required number of fans 17 of the processing equipments may be operated in units of racks, in order to reduce the power consumption of the computer 11.

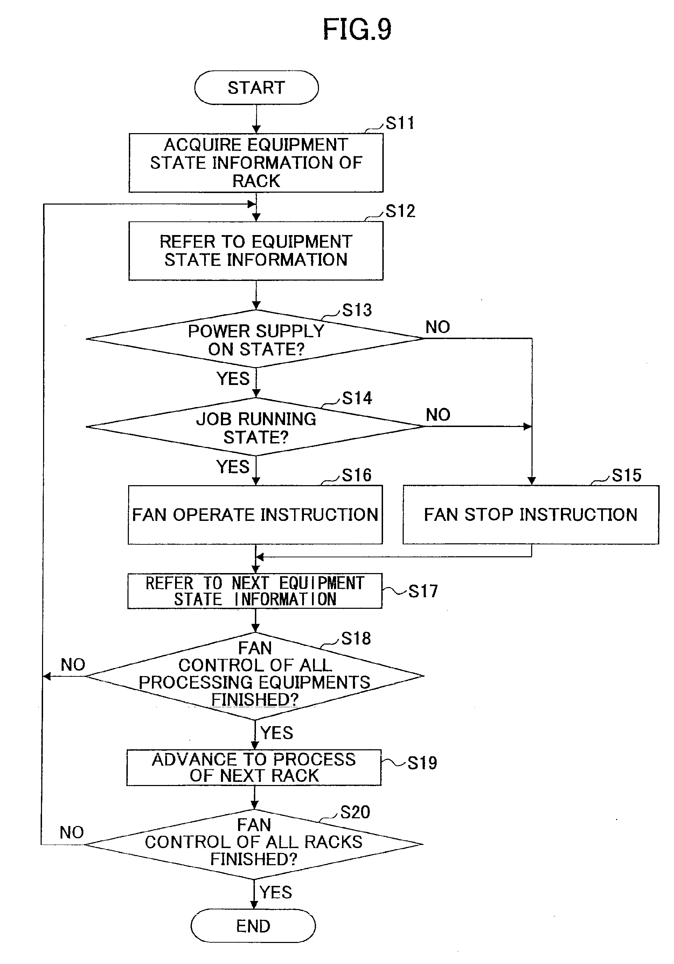

FIG. 9 is a flow chart for explaining a process of the control server 31 for a case where only a fan of an operating processing equipment is operated. In FIG. 9, a step S11 acquires the equipment state list of an arbitrary rack. A step S12 refers to the equipment state information of an arbitrary processing equipment within the equipment state list. A step S13 decides whether the power supply state is the power ON state PON. If the decision result in the step S13 is YES, a step S14 decides whether the job running state is the running state "run". If the decision result in the step S13 or the step S14 is NO, a step S15 makes an instruction to stop the fan 17 of the arbitrary processing equipment with respect to the control unit 16 of the arbitrary processing equipment, and the process advances to a step S17. On the other hand, if the decision result in the step S14 is YES, a step S16 makes an instruction to operate the fan 17 of the arbitrary processing equipment with respect to the control unit 16 of the arbitrary processing equipment, and the process advances to the step S17.

The step S17 refers to the equipment state information of the next processing equipment of the arbitrary rack. A step S18 decides whether the fan control with respect to all of the processing equipments 13-1 through 13-M within the arbitrary rack is finished, and the process returns to the step S12 if the decision result in the step S18 is NO. If the decision result in the step S18 is YES, a step S19 advances to the process with respect to the next rack, and acquires the equipment state information of the next rack. A step S20 decides whether the fan control with respect to all of the racks within the computer 11 is finished, and the process returns to the step S12 if the decision result in the step S20 is NO.

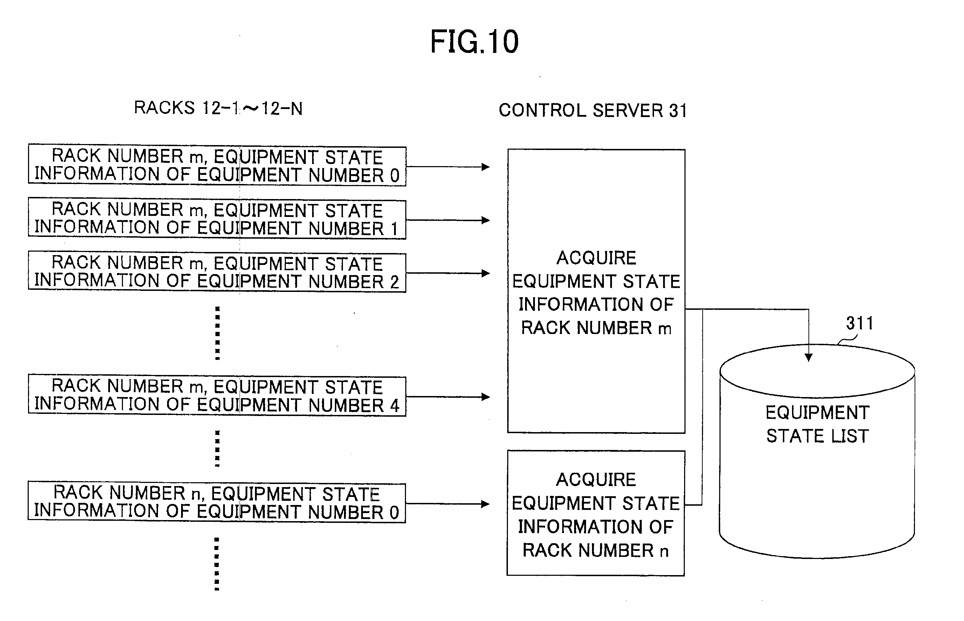

FIG. 10 is a diagram for explaining the generation of the equipment state list. As illustrated in FIG. 10, the equipment state information of each of the processing equipments 13-1 through 13-M of each of the racks 12-1 through 12-N is acquired from the corresponding control unit 16 via the communication channels 21 and 20, and is stored in a storage part 311 within the control server 31 in the form of the equipment state list.

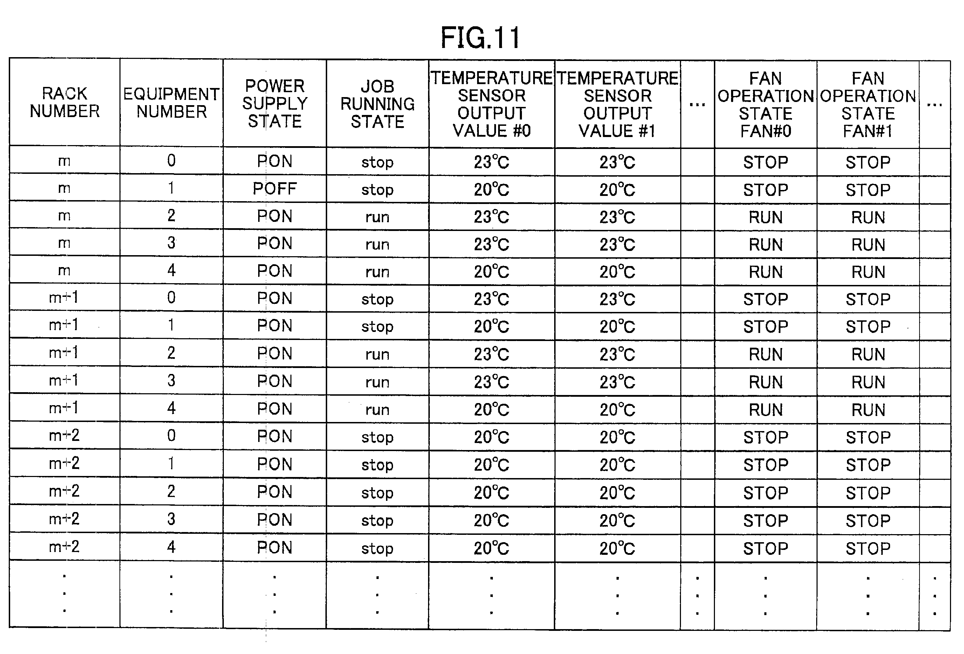

FIG. 11 is a diagram illustrating an example of the equipment state list. As illustrated in FIG. 11, the equipment state list stores the equipment state information illustrated in FIG. 7 with respect to rack numbers m, m+1, ... of each of the racks 12-1 through 12-N. The rack number is the information added to each of the racks 12-1 through 12-N to identify each of the racks 12-1 through 12-N.

Next, a description will be given of a process of the control server 31 that acquires fan operation start temperature information from the control unit 16 within each of the processing equipments 13-1 through 13-M, for each of the racks 12-1 through 12-N, in addition to generating the equipment state list described above. The control server 31 compares the temperature sensor output value of each of the processing equipments within the equipment state list and the operation start temperature of the fan operation start temperature information, and instructs operation of the fan 17 only to the control unit 16 of the processing equipment that has the temperature sensor output value higher than or equal to the operation start temperature. In this case, only a minimum required number of fans 17 of the processing equipments may be operated in units of racks, in order to reduce the power consumption of the computer 11.

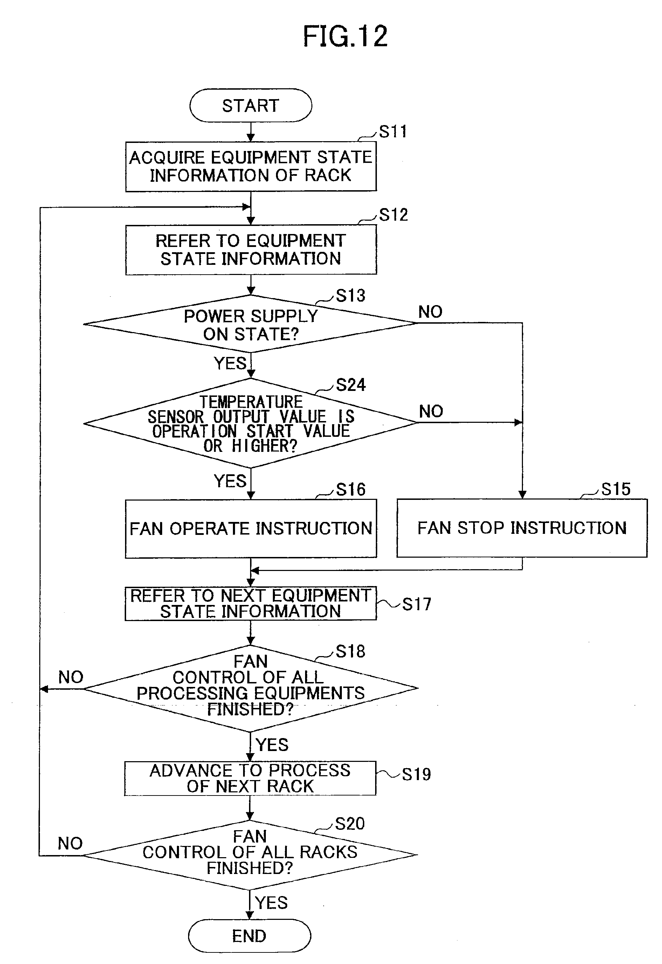

FIG. 12 is a flow chart for explaining a process of the control server 31 for a case where only the fan of the processing equipment that requires cooling is operated. In FIG. 12, those steps that are the same as those corresponding steps in FIG. 9 are designated by the same reference numerals, and a description thereof will be omitted.

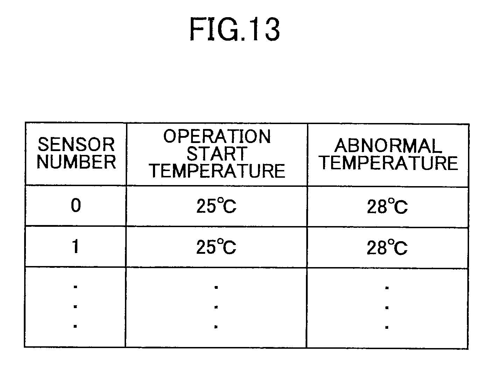

In FIG. 12, if the decision result in the step S13 is YES, a step S24 acquires the fan operation start temperature information illustrated in FIG. 13 from the control unit of the arbitrary processing equipment, and decides whether the corresponding temperature sensor output value within the equipment state list is higher than or equal to the operation start temperature. The process advances to the step S15 if the decision result in the step S24 is NO, and the process advances to the step S16 if the decision result in the step S24 is YES. Accordingly, the step S16 makes an instruction to operate the fan 17 of the arbitrary processing equipment in which the temperature sensor output value is higher than or equal to the operation start temperature, only with respect to the control unit 16 of the arbitrary processing equipment.

FIG. 13 is a diagram illustrating an example of the fan operation start temperature information. The fan operation start temperature information includes a sensor number added to each of the temperature sensors 25 to identify each of the temperature sensors 25, an operation start temperature at which a steady-state rotation of the fan 17 starts within the processing equipment provided with each of the temperature sensors 25, and an abnormal temperature at which an additional cooling is required by causing a high-speed rotation of the fan 17 within the processing equipment provided with each of the temperature sensors 25. The fan operation start temperature information is prestored in the storage part 161 within the control unit 16 of each of the processing equipments 13-1 through 13-M. An embodiment in which the additional cooling is performed will be described later in the specification.

### Second Embodiment

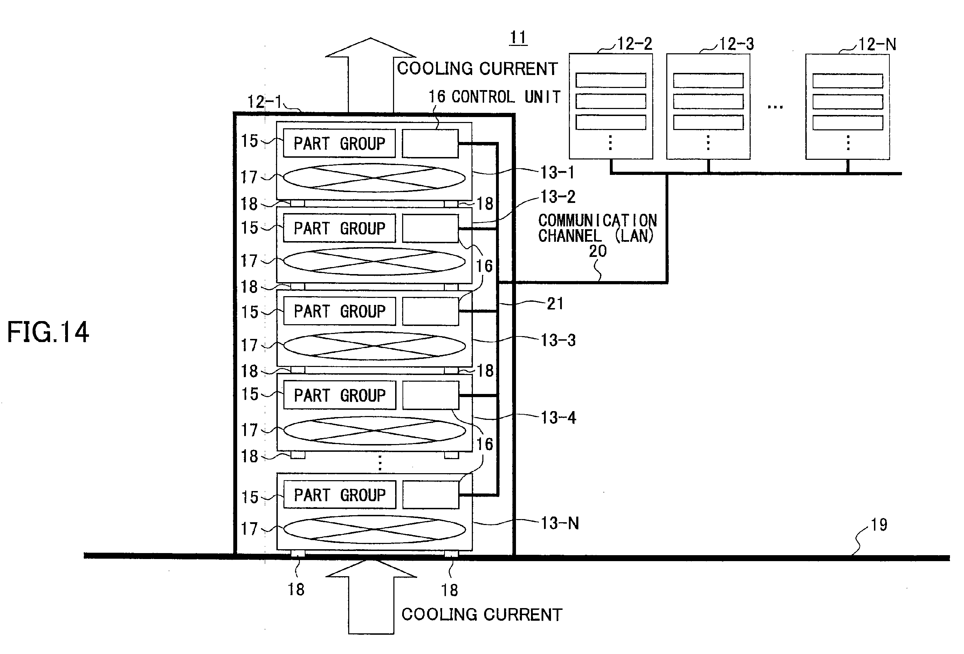

Next, a description will be given of a computer in a second embodiment of the present invention. FIG. 14 is a diagram illustrating the computer in the second embodiment of the present invention. In FIG. 14, those parts that are the same as those corresponding parts in FIG. 2 are designated by the same reference numerals, and a description thereof will be omitted. In this embodiment, the fan 17 is controlled from the control unit 16 within a representative processing equipment in one rack, instead of utilizing the control server 31 to control the fan 17.

A description will now be given of a process of the control unit 16 within a representative processing equipment 13-i (i=1, ..., M) amongst the processing equipments 13-1 through 13-M, including acquiring the equipment state information illustrated in FIG. 7 from the control unit 16 within the other processing equipments, generating the equipment state list from the equipment state information, and instructing operation of the fan 17 only to the control unit 16 of the processing equipment that is indicated as having a job running (or in operation) within the equipment state list, for each of the racks 12-1 through 12-N. In this case, only a minimum required number of fans 17 of the processing equipments may be operated in units of racks, in order to reduce the power consumption of the computer 11.

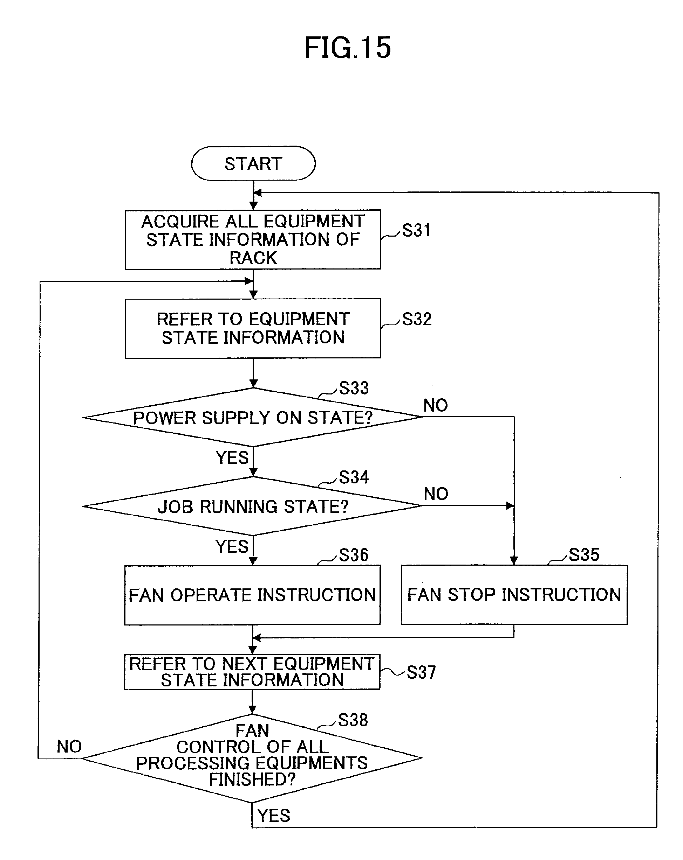

FIG. 15 is a flow chart for explaining a process of the control unit 16 within the representative processing equipment 13-i for a case where only the fan of the operating processing equipment is operated. The representative processing equipment 13-i may be determined in advance by default or, selected by the user. For the sake of convenience, a description will be given of the process within the rack 12=1, however, the process within the other racks 12-2 through 12-N may be carried out in a manner similar to the process within the rack 12-1. In addition, it is assumed for the sake of convenience that the representative processing equipment 13-i is the processing equipment 13-1 in this example. In FIG. 15, a step S31 communicates with the control unit 16 of the other processing equipments 13-2 through 13-M within the rack 12-1 via the communication channel 21, in order to acquire the equipment state list of the rack 12-1. A step S32 refers to the equipment state information of an arbitrary processing equipment within the equipment state list. The arbitrary processing equipment may be any of the processing equipments 13-1 through 13-M, including the representative processing equipment 13-1, within the rack 12-1. A step S33 decides whether the power supply state is the power ON state PON. If the decision result in the step S33 is YES, a step S34 decides whether the jog running state is the running state "run". If the decision result in the step S33 or the step S34 is NO, a step S35 makes an instruction to stop the fan 17 of the arbitrary processing equipment, with respect to the control unit 16 of the arbitrary processing equipment, and the process advances to a step S37. On the other hand, if the decision result in the step S34 is YES, a step S36 makes an instruction to operate the fan 17 of the arbitrary processing equipment, with respect to the control unit 16 of the arbitrary processing equipment, and the process advances to the step S37.

The step S37 refers to the equipment state information of the next processing equipment within the rack 12-1. A step S38 decides whether the fan control with respect to all of the processing equipments 13-1 through 13-M within the rack 12-1 is finished, and the process returns to the step S32 if the decision result in the step S38 is NO. If the decision result in the step S38 is YES, the process returns to the step S31. Hence, the process of the steps S31 through S38 is repeated periodically.

Next, a description will be given of a process of the control unit 16 within the representative processing equipment 13-1, including acquiring the fan operation start temperature information from the control unit 16 of each of the processing equipments 13-1 through 13-M within the rack 12-1, in addition to generating the equipment state list described above. The control unit 16 of the representative processing equipment 16-1 compares the temperature sensor output value of each of the processing equipments within the equipment state list and the operation start temperature of the fan operation start temperature information, and instructs operation of the fan 17 only to the control unit 16 of the processing equipment that has the temperature sensor output value higher than or equal to the operation start temperature. In this case, only a minimum required number of fans 17 of the processing equipments may be operated in units of racks, in order to reduce the power consumption of the computer 11.

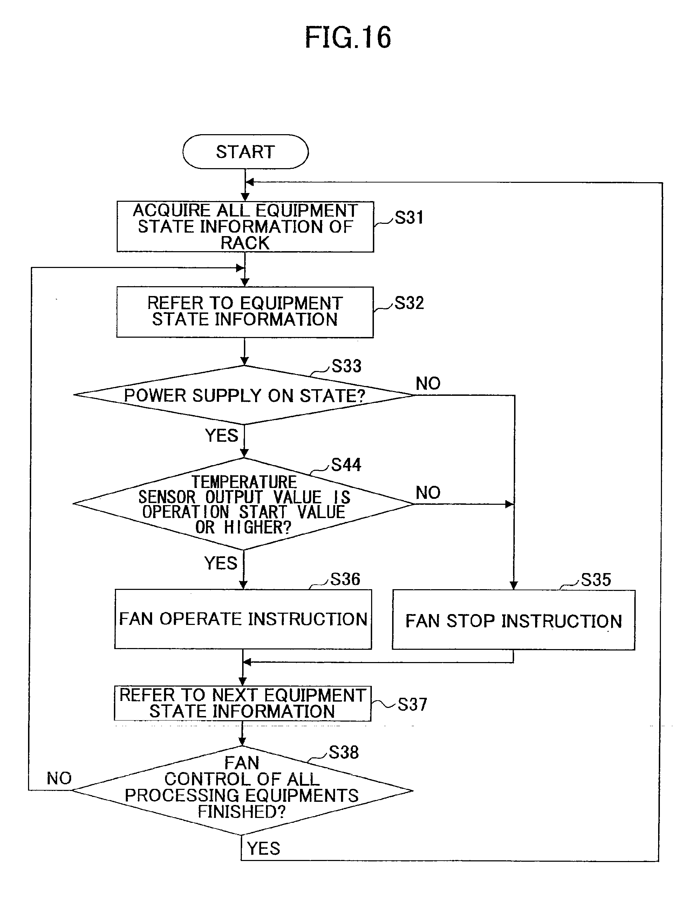

FIG. 16 is a flow chart for explaining a process of the control unit 16 within the representative processing equipment 13-1 for a case where only the fan of the processing equipment that requires cooling is operated. In FIG. 16, those steps that are the same as those corresponding steps in FIG. 15 are designated by the same reference numerals, and a description thereof will be omitted.

In FIG. 16, if the decision result in the step S16 is YES, a step S44 acquires the fan operation start temperature information illustrated in FIG. 13 from the control unit 16 within the arbitrary processing equipment, and judges whether the corresponding temperature sensor output value within the equipment state list is higher than or equal to the operation start temperature. The process advances to the step S35 if the decision result in the step S44 is NO, and the process advances to the step S36 if the decision result in the step S44 is YES. Accordingly, the step S36 makes an instruction to operate the fan 17 of the arbitrary processing equipment in which the temperature sensor output value is higher than or equal to the operation start temperature, only with respect to the control unit 16 of the arbitrary processing equipment.

### Third Embodiment

Next, a description will be given of a computer in a third embodiment of the present invention. The computer in this third embodiment may have the same structure as the computer illustrated in FIG. 2.

This embodiment combines the process of the control server 31 illustrated in FIG. 9 and the process of the representative processing equipment 13-i illustrated in FIG. 16. In other words, in addition to the control by the control server 31, the control unit 16 of the representative processing equipment 13-i within an arbitrary rack makes an instruction to operate the fan 17 of the processing equipments 13-1 through 13-M within the arbitrary rack, regardless of the instruction from the control server 31, if the control unit 16 of the representative processing equipment 13-i within the arbitrary rack detects a temperature abnormality from the output values of the temperature sensors 25 of the processing equipments 13-1 through 13-M within the arbitrary rack. Hence, the cooling in units of racks may be guaranteed even if the control server 31 fails or, the communication is not possible between the control server 31 and the control unit 16 of the processing equipments 13-1 through 13-M within the arbitrary rack for some reason.

### Fourth Embodiment

Next, a description will be given of a computer in a fourth embodiment of the present invention. The computer in this fourth embodiment may have the same structure as the computer illustrated in FIG. 2 or FIG. 14. The structure illustrated in FIG. 2 is used in a case where the control server 31 performs the fan control when a failure of the fan 17 occurs within an arbitrary rack, and the structure illustrated in FIG. 14 is used in a case where the control unit 16 of the representative processing equipment within the arbitrary rack performs the fan control when a failure of the fan 17 occurs within the arbitrary rack. It is assumed for the sake of convenience that the arbitrary rack is the rack 12-1, and that the arbitrary processing equipment within the arbitrary rack 12-1 is the processing equipment 13-3.

First, a description will be given of the case where the control server 31 performs the fan control. In the arbitrary processing equipment 13-3 within the arbitrary rack 12-1, when the control unit 16 detects the failure of the fan 17, the control unit 16 updates the equipment state information of the arbitrary processing equipment 13-3 and sends a fan failure event to the control server 31. The control server 31 acquires the equipment state information from the control unit 16 of the arbitrary processing equipment 13-3 in response to the fan failure event, and updates the equipment state list. The control server 31 refers to the arbitrary processing equipment 13-3 in which the failure of the fan 17 is generated and the fan operation state within the arbitrary rack 12-1, within the updated equipment state list, and selects the processing equipment in the fan stopped state in order to instruct operation of the fan 17 with respect to the control unit 16 of the selected processing equipment. Accordingly, an amount of cooling current sufficient to cool the arbitrary processing equipment 13-3 in which the failure of the fan 17 is generated may be secured. If the fans 17 of the processing equipments 13-1, 13-2, 13-4 through 13-M, other than the arbitrary processing equipment 13-3 in which the failure of the fan 17 is generated, are operating, a high-speed rotation of any one of the fans 17 that are operating may be instructed in order to secure the amount of cooling current. The fan 17 that is operating and is instructed to make the high-speed rotation may be the fan 17 of the processing equipment in a vicinity of the arbitrary processing equipment 13-3 in which the failure of the fan 17 is generated or, the fan 17 of the processing equipment 13-1 at the upper side within the arbitrary rack 12-1 or, the fan 17 of the processing equipment 13-M at the lower side of the arbitrary rack 12-1. In this case, by instructing the operation start or the high-speed rotation of the fan 17 of the other processing equipments 13-1, 13-2, 13-4 through 13-M within the arbitrary rack 12-1 with respect to the corresponding control unit 16 when the failure of the fan 17 in the arbitrary processing equipment 13-3 is detected, a redundant structure of the cooling mechanism may be realized in units of racks, even if the fans 17 of the individual processing equipments 13-1 through 13-M do not have the redundant structure.

Next, a description will be given of the case where the control unit 16 performs the fan control. In the arbitrary processing equipment 13-3 within the arbitrary rack 12-1, when the control unit 16 detects the failure of the fan 17, the control unit 16 updates the equipment state information of the arbitrary processing equipment 13-3 and sends a fan failure event to the control unit 16 of the representative processing equipment 13-1 within the rack 12-1. This control unit 16 of the representative processing equipment 13-1 acquires the equipment state information from the control unit 16 of the arbitrary processing equipment 13-3 in response to the fan failure event, and updates the equipment state list. This control unit 16 of the representative processing equipment 13-1 refers to the arbitrary processing equipment 13-3 in which the failure of the fan 17 is generated and the fan operation state within the arbitrary rack 12-1, within the updated equipment state list, and selects the processing equipment in the fan stopped state in order to instruct operation of the fan 17 with respect to the control unit 16 of the selected processing equipment. Accordingly, an amount of cooling current sufficient to cool the arbitrary processing equipment 13-3 in which the failure of the fan 17 is generated may be secured. If the fans 17 of the processing equipments 13-1, 13-2, 13-4 through 13-M, other than the arbitrary processing equipment 13-3 in which the failure of the fan 17 is generated, are operating, a high-speed rotation of any one of the fans 17 that are operating may be instructed in order to secure the amount of cooling current. The fan 17 that is operating and is instructed to make the high-speed rotation may be the fan 17 of the processing equipment in a vicinity of the arbitrary processing equipment 13-3 in which the failure of the fan 17 is generated or, the fan 17 of the processing equipment 13-1 at the upper side within the arbitrary rack 12-1 or, the fan 17 of the processing equipment 13-M at the lower side of the arbitrary rack 12-1. In this case, by instructing the operation start or the high-speed rotation of the fan 17 of the other processing equipments 13-1, 13-2, 13-4 through 13-M within the arbitrary rack 12-1 with respect to the corresponding control unit 16 when the failure of the fan 17 in the arbitrary processing equipment 13-3 is detected, a redundant structure of the cooling mechanism may be realized in units of racks, even if the fans 17 of the individual processing equipments 13-1 through 13-M do not have the redundant structure.

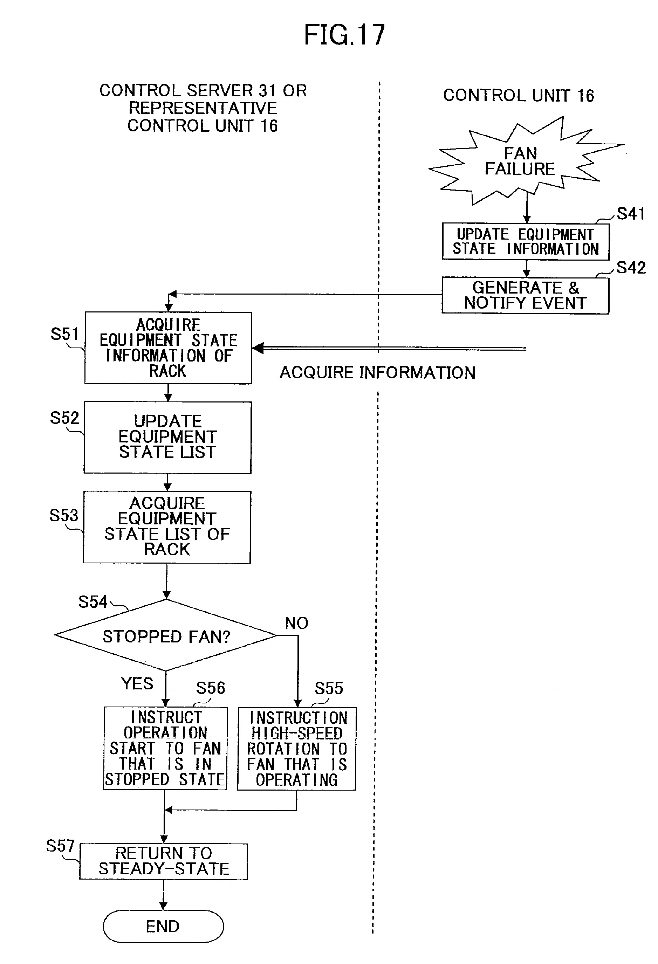

FIG. 17 is a flow chart for explaining a process in the fourth embodiment of the present invention. In FIG. 17, steps S41 and 42 indicate the process of the control unit 16 of the arbitrary processing equipment 13-3 in which the failure of the fan 17 is detected, in the arbitrary rack 12-1. Steps S51 through S57 indicate the process of the control server 31 or, the control unit 16 of the representative processing equipment 13-1 within the arbitrary rack 12-1.

When the control unit 16 of the processing equipment 13-3 within the rack 12-1 detects the failure of the fan 18, the step S41 updates the equipment state information of the processing equipment 13-3, and the step S42 sends the fan failure event to the control server 31 (or the control unit 16 of the representative processing equipment 13-1 within the rack 12-1).

The control server 31 (or the control unit 16 of the representative processing equipment 13-1) acquires the equipment state information from the control unit 16 of the processing equipment 13-3 in response to the fan failure event in the step S51, and updates the equipment state list in the step S52. The control server 31 (or the control unit 16 of the representative processing equipment 13-1) acquires the updated state list in the step S53, and refers to the arbitrary processing equipment 13-3 in which the failure of the fan 17 is generated and the fan operation state within the arbitrary rack 12-1, within the updated equipment state list, in order to decide in the step S54 whether a processing equipment in the fan stopped state exists. If the decision result in the step S54 is NO, the step S55 instructs a high-speed rotation of the fan 17 with respect to the control unit 16 of any one of the processing equipments 13-1, 13-2, 13-4 through 13-M in which the fan 17 is operating, in order to secure the amount of cooling current. On the other hand, if the decision result in the step S54 is YES, the step S56 instructs the operation of the fan 17 with respect to the control unit 16 of any one of the processing equipments 13-1, 13-2, 13-4 through 13-M in which the fan 17 is in the fan stopped state. Hence, an amount of cooling current sufficient to cool the processing equipment 13-3 in which the failure of the fan 17 is generated may be secured. After the step S55 or the step S56, the step S57 returns the fan 17 that is instructed to make the high-speed rotation or, the fan 17 that is in the stopped state and instructed to start operating, to make the original steady-state rotation after a predetermined time elapses, and the process ends.

### Fifth Embodiment

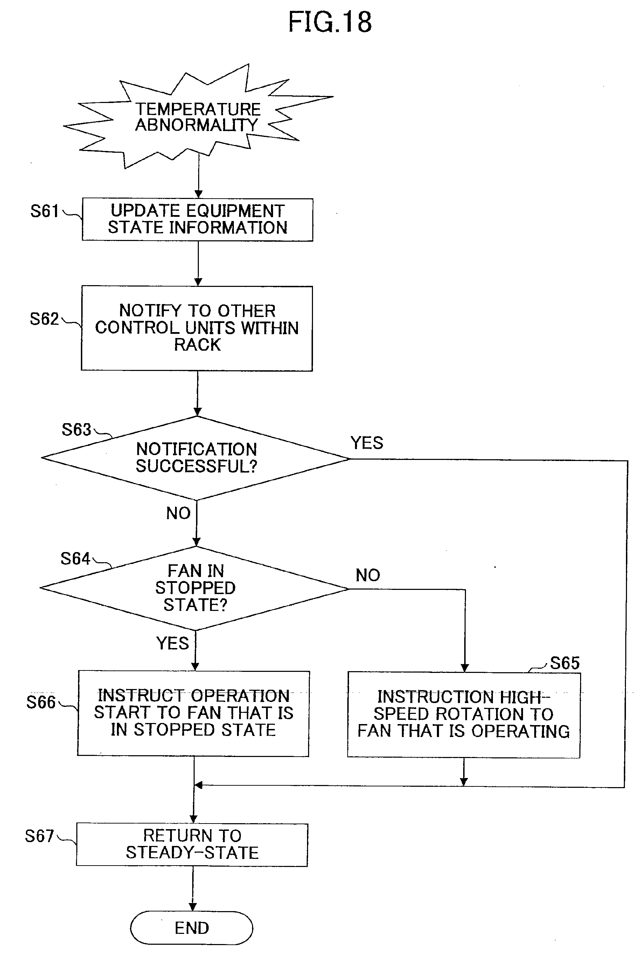

Next, a description will be given of a computer in a fifth embodiment of the present invention. The computer in this fifth embodiment may have the same structure as the computer illustrated in FIG. 14. In this embodiment, if the communication is not possible between the representative processing equipment 13-1 within the arbitrary rack 12-1 and the other processing equipments 13-2 through 13-M within the arbitrary rack 12-1 during execution of the process illustrated in FIG. 16 by the representative processing equipment 13-1 for some reason, a process illustrated in FIG. 18 is carried out. FIG. 18 is a flow chart for explaining the process in the fifth embodiment of the present invention.

In FIG. 18, when the representative processing equipment 13-1 detects a temperature abnormality therein, a step S61 updates the equipment state information of the representative processing equipment 13-1, and a step S62 notifies the temperature abnormality to the other processing equipments 13-2 through 13-M within the rack 12-1. A step S63 decides whether the temperature abnormality is successfully notified to each of the other processing equipments 13-2 through 13-M within the rack 12-1, based on a response from each of the other processing equipments 13-2 through 13-M within the rack 12-1. If the communication may be made between the representative processing equipment 13-1 and the other processing equipments 13-2 through 13-M and the decision result in the step S63 is YES, the process advances to a step S67 which will be described later.

On the other hand, if the decision result in the step S63 is NO, a step S64 decides whether the fan 17 within the representative processing equipment 13-1 is in the stopped state. If the decision result in the step S64 is NO, a step S65 instructs a high-speed rotation of the fan 17 that is operating, and the process advances to the step S67. If the decision result in the step S64 is YES, a step S66 instructs the operation start of the fan 17 that is in the stopped state, and the process advances to the step S67. The step S67 returns the fan 17 that is instructed to make the high-speed rotation by the step S65 or, the fan 17 that is in the stopped state and instructed to start operating by the step S66, to make the original steady-state rotation after a predetermined time elapses, and the process ends.

Accordingly, in the rack 12-1, even in a state where the control unit 16 of the representative processing equipment 13-1 cannot perform the fan control with respect to the other processing equipments 13-2 through 13-M, it may still be possible to guarantee the cooling condition within the rack 12-1.

### Sixth Embodiment

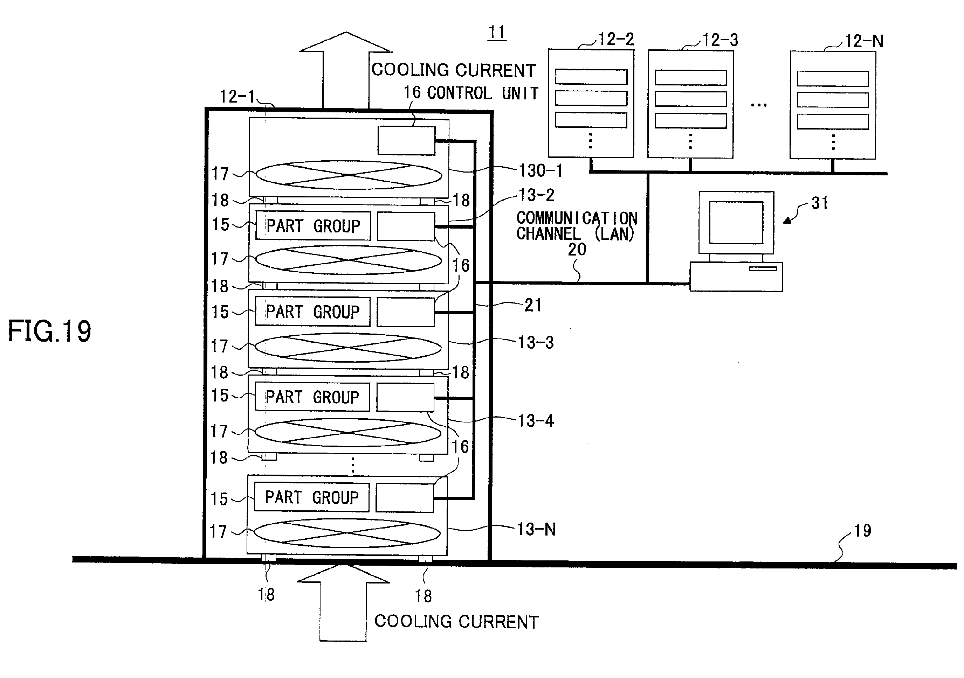

Next, a description will be given of a sixth embodiment of the present invention. FIG. 19 is a diagram illustrating a computer in the sixth embodiment of the present invention. In FIG. 19, those parts that are the same as those corresponding parts in FIG. 2 are designated by the same reference numerals, and a description thereof will be omitted. In this sixth embodiment, a cooling apparatus 130-1 is used in place of the representative processing equipment 13-1 in any of the second through fifth embodiments described above. The control server 31 may or may not be used.

As illustrated in FIG. 19, the cooling apparatus 130-1 basically has the same structure as the processing equipment 13-1 with the exception of not including the part group 15. The fan 17 within the cooling apparatus 130-1 may function as a redundant fan that is common to each of the processing equipments 13-2 through 13-M within the arbitrary rack 12-1. The cooling apparatus 130-1 is not operated during normal operation. But when the control unit 16 of cooling apparatus 130-1 detects a failure of the fan 17 based on a notification of a fan failure event from any of the processing equipments 13-2 through 13-M, the control server 31 instructs the operation start or the high-speed rotation of the fan 17 of the cooling apparatus 130-1 with respect to the control unit 16 of the cooling apparatus 130-1. Hence, a redundant structure of the cooling mechanism may be realized in units of racks.

Similarly, the cooling apparatus 130-1 may not be operated during normal operation, but when the control unit 16 of cooling apparatus 130-1 detects a temperature abnormality based on an abnormal temperature notification from any of the processing equipments 13-2 through 13-M, the control server 31 may instruct the operation start of the fan 17 of the cooling apparatus 130-1 with respect to the control unit 16 of the cooling apparatus 130-1. Hence, a redundant structure of the cooling mechanism may be realized in units of racks.

In addition, when the control server 31 is not used for the fan control, the control unit 16 of the cooling apparatus 130-1 may detect the failure of the fan 17 or the temperature abnormality within the rack 12-1, and instructs the operation start or the high-speed rotation of the fan 17 within the cooling apparatus 130-1. Thus, a redundant structure of the cooling mechanism may be realized in units of racks, even when the control server 31 is not used.

### INDUSTRIAL APPLICABILITY

The present invention may be applied to computers and the like having a structure in which equipments mounted no a rack are cooled by one or more fans.

Further, the present invention is not limited to these embodiments, but various variations and modifications may be made without departing from the scope of the present invention.

## Claims

1. A cooling method for a computer having at least one rack and a plurality of processing equipments mounted on the one rack, comprising:
mounting the plurality of processing equipments on the one rack in a state stacked in a vertical direction of the one rack; and
cooling the plurality of processing equipments mounted on the one rack, by operating a fan of at least one of the plurality of processing equipments in order to flow a cooling current in the vertical direction.

2. The cooling method as claimed in claim 1, comprising:
judging whether each of the plurality of processing equipments is operating based on equipment state information; and
controlling the plurality of processing equipments in order to operate only the fan of the processing equipment that is operating.

3. The cooling method as claimed in claim 1, comprising:
judging whether a temperature within each of the plurality of processing equipments is higher than or equal to a predetermined temperature based on the equipment state information; and
controlling the plurality of processing equipments in order to operate only the fan of the processing equipment in which the temperature is higher than or equal to the predetermined temperature.

4. The cooling method as claimed in claim 1, comprising:
in response to a failure notification from an arbitrary processing equipment whose fan has failed, making an operation start instruction with respect to a fan of a processing equipment other than the arbitrary processing equipment if the fan of the processing equipment other than the arbitrary processing equipment is stopped, and making a high-speed rotation instruction with respect to a fan that is operating if the processing equipment other than the arbitrary processing equipment has no fan that is stopped.

5. A computer comprising:
at least one rack;
a plurality of processing equipments mounted on the one rack in a state stacked in a vertical direction of the one rack; and
control means for cooling the plurality of processing equipments mounted on the one rack, by operating a fan of at least one of the plurality of processing equipments in order to flow a cooling current in the vertical direction.

6. The computer as claimed in claim 5, wherein the control means judges whether each of the plurality of processing equipments is operating based on equipment state information, and controls the plurality of processing equipments in order to operate only the fan of the processing equipment that is operating.

7. The computer as claimed in claim 6, wherein the control means judges that each of the plurality of processing equipments is operating if a power supply thereof is in an ON state and a job is running therein.

8. The computer as claimed in claim 5, wherein the control means judges whether a temperature within each of the plurality of processing equipments is higher than or equal to a predetermined temperature based on the equipment state information, and controls the plurality of processing equipments in order to operate only the fan of the processing equipment in which the temperature is higher than or equal to the predetermined temperature.

9. The computer as claimed in claim 6, wherein the control means is formed by an external control unit that is coupled to the plurality of processing equipments via a communication channel and acquires the equipment state information from the plurality of processing equipments.

10. The computer as claimed in claim 6, wherein the control means is formed by a representative processing equipment that is mounted on the one rack, coupled to each of the plurality of processing equipments mounted on the one rack via a communication channel, and acquires the equipment state information from each of the plurality of processing equipments.

11. The computer as claimed in claim 10, wherein:
if no communication is possible between the representative processing equipment and the other processing equipments mounted on the one rack, the control means makes an operation start instruction with respect to a fan of a processing equipment other than the representative processing equipment if the fan of the processing equipment other than the representative processing equipment is stopped, and makes a high-speed rotation instruction with respect to a fan that is operating if the processing equipment other than the representative processing equipment has no fan that is stopped.

12. The computer as claimed in claim 5, wherein:
in response to a failure notification from an arbitrary processing equipment whose fan has failed, the control means makes an operation start instruction with respect to a fan of a processing equipment other than the arbitrary processing equipment if the fan of the processing equipment other than the arbitrary processing equipment is stopped, and makes a high-speed rotation instruction with respect to a fan that is operating if the processing equipment other than the arbitrary processing equipment has no fan that is stopped.

13. The computer as claimed in claim 12, wherein the control means is formed by an external control unit that is coupled to the plurality of processing equipments via a communication channel and receives the failure notification from the arbitrary processing equipment.

14. The computer as claimed in claim 12, wherein the control means is formed by a representative processing equipment that is mounted on the one track, coupled to each of the processing equipments mounted on the one rack via a communication channel, and receives the failure notification from the arbitrary processing equipment.
